# FASCICULE DE BREVET EUROPEEN

(11) **EP 2 311 327 B1**
(45) Date de publication et mention de la délivrance du brevet: **15.05.2013**
(21) Numéro de dépôt: 10290535.3
(22) Date de dépôt: 06.10.2010
(51) Int. Cl.: A23L 3/14

(54) **Système de secouage d'articles à l'intérieur d'un équipement sous pression, en particulier un autoclave**
System zum Schütteln von Gegenständen im Innern eines Geräts, das unter Druck steht, insbesondere eines Autoklavs
System for shaking items inside a pressurised device, in particular an autoclave

(30) Priorité: 13.10.2009 FR 0904916; 13.10.2009 US 577970
(43) Date de publication de la demande: 20.04.2011
(73) Titulaire: Steriflow, 42300 Roanne (FR)
(72) Inventeur: Roumagnac, Jean-Patrick, 42120 Le Coteau (FR); Naveros, Francisco, 42300 Roanne (FR); Cocco, Philippe, 42300 Roanne (FR)
(74) Mandataire: Rataboul, Xavier

(56) Documents cités:
- EP-A1- 2 042 044
- WO-A2-2008/080549
- GB-A- 2 411 335
- GB-A- 2 448 147

## Description

L'invention se rapporte à un système de secouage d'articles à l'intérieur d'un équipement sous pression, en particulier un autoclave.

De nombreux produits alimentaires et pharmaceutiques doivent subir un traitement thermique (cuisson, pasteurisation, stérilisation) pour être vendus. Il s'agit, par exemple, de produits liquides tels que les produits lactés, les soupes, les purées, mais également de produits solides tels les légumes, les viandes, contenus dans des emballages hermétiques divers tels que des boîtes de conserve, sachets, bols, barquettes.

Le traitement thermique doit pouvoir être fait de manière homogène sur une quantité industrielle de produit. Par quantité industrielle, on entend un poids supérieur à 100 kilos et, plus précisément un poids d'une tonne et plus de produit.

Plusieurs systèmes sont actuellement connus. Le premier est un autoclave statique. Cet autoclave présente un panier dans lequel sont empilés les produits. Puis, le panier est enfermé dans l'autoclave où il subit une hausse de température et de pression déterminée. De préférence, de l'eau surchauffée peut ruisseler sur les produits pour favoriser le transfert de chaleur.

Ce système présente l'avantage de permettre un traitement de quantités industrielles de produit (de 100 kg jusqu'à 10 tonnes). En outre, il conserve partiellement les qualités organoleptiques des produits, il est fiable et reproductible.

Ce système nécessite une durée de traitement relativement longue (2 à 3 heures). De plus, sa mise en oeuvre conduit également à la cuisson des produits.

Pour réduire la durée de traitement, il a été proposé un système rotatif, dans lequel le panier est mis en rotation dans l'autoclave pendant le traitement thermique, à une fréquence de 2 à 20 rotations par minutes. Ce système réduit la durée de traitement car il favorise la convection forcée.

Cependant, ce système présente une structure complexe pour mettre le panier en rotation. En outre, sa fiabilité est inférieure au premier système puisque de nombreuses pièces mécaniques sont sollicitées et usées.

Un autre système, baptisé «DALI» a été développé pour secouer mécaniquement les produits. Ce troisième système comprend un panier monté sur un système translatif. Les produits sont donc secoués longitudinalement, à une fréquence de trois allers-retours par minute, soit six coups par minute.

Un système amélioré baptisé « SHAKA » a été développé pour permettre un secouage des produits emballés hermétiquement.

Ce système comprend une enceinte d'autoclave, dans laquelle est disposé un panier relié à un excentrique par une tringlerie sortant de l'enceinte. Ce mécanisme permet d'agiter le panier à une fréquence de 100 à 200 coups par minutes.

Ce système est très efficace, car il permet une stérilisation en un temps très court, par exemple quinze minutes. Cependant, il ne permet pas d'agiter une quantité importante de produit, tout au plus quelques kilos à une dizaine de kilos. En effet, les pièces mécaniques subissent de telles contraintes de vibration et de choc que le traitement à une échelle industrielle est impossible avec une fiabilité satisfaisante et à des coûts raisonnables.

Des systèmes de secouage d'articles dans des autoclaves sont notamment décrits dans les brevets WO 2008/080549, GB 2 448 147 et EP 2 042 044.

L'objectif de la présente invention est donc de proposer un autoclave fiable, économiquement viable et permettant le traitement thermique rapide de produits alimentaires ou pharmaceutiques en quantité industrielle.

Pour cela, l'invention propose de réaliser un autoclave présentant une enceinte découplée de manière souple, d'une part, d'un châssis intérieur de support d'un panier et, d'autre part, d'un bâti extérieur muni d'un mécanisme de secouage du panier.

A cette fin, l'invention a pour objet un système de secouage d'articles à l'intérieur d'un équipement sous pression, tel qu'un autoclave pour le traitement thermique de produits alimentaires ou pharmaceutiques, comprenant une enceinte munie d'un moyen de chauffage, d'un moyen de pressurisation et un panier de stockage des articles couplé à un moyen de secouage en translation, système dans lequel le panier est monté coulissant sur un châssis présentant un tablier soutenu par des colonnes de support traversant l'enceinte de manière étanche et découplée et destinées à être fixées sur un support immobile.

Grâce au système de secouage selon l'invention, il est possible d'effectuer un traitement thermique court d'une quantité importante de produits : environ 15 minutes pour un panier d'une tonne. Ce poids correspond au poids des articles et du panier proprement dit. Cependant, le ratio poids des produits / poids du panier est tributaire du type d'emballages traités. Si les articles sont des pots en verre, on a approximativement 800 Kg d'articles et 200 Kg de panier ; si les articles sont des bols en plastique, on a plutôt 600 Kg d'articles et 400 Kg de panier.

Le poids d'une tonne est donné à titre d'exemple.

Selon d'autres modes de réalisation :
- e moyen de secouage en translation peut comprendre:
   - un excentrique actionnable par un moteur, et
   - un arbre couplé à l'excentrique et au panier ;
- l'arbre peut être supporté par un palier associé à l'enceinte de manière étanche et découplée ;
- l'arbre peut être couplé au panier par l'intermédiaire d'un plateau monté coulissant sur le châssis et d'un moyen de fixation du panier sur le plateau ;
- les colonnes de support peuvent être fixées à l'enceinte au moyen d'un soufflet ;
- le soufflet peut être en un matériau choisi parmi un matériau élastomère et de l'inox;
- chaque soufflet peut présenter une structure tubulaire souple dont une extrémité est fixée à une colonne et l'autre extrémité est fixée à l'enceinte ;
- le moyen de chauffage et le moyen de pressurisation peuvent être associés à l'enceinte de manière étanche et découplée au moyen d'un soufflet ;
- le tablier peut être attaché aux colonnes de support au moyen de tiges coopérant de manière coulissante avec un orifice ménagé dans chaque colonne;
- les tiges peuvent être disposées sur le tablier de manière coaxiale avec une ou des direction(s) de dilatation privilégiée du tablier ;
- le tablier peut présenter une forme sensiblement rectangulaire et les tiges sont disposés coaxialement par rapport aux diagonales du rectangle ;
- des moyens de rappel peuvent être agencés entre le tablier et les colonnes de support pour recentrer le tablier par rapport aux colonnes de support lors du refroidissement ;
- le moyen de fixation peut comprendre une griffe d'accrochage destinée à coopérer avec le panier, montée pivotante par rapport au plateau, entre une position de fixation et une position de libération du panier par rapport au plateau ;
- la griffe d'accrochage peut être combinée à un moyen de rappel en position de fixation ; et/ou
- les colonnes de support du châssis peuvent être fixées sur un bâti extérieur à l'enceinte.

D'autres caractéristiques de l'invention seront énoncées dans la description détaillée ci-après, faite en référence aux figures annexées qui représentent, respectivement :
- la figure 1, une vue schématique en coupe d'un premier mode de réalisation d'un autoclave selon l'invention;
- la figure 2, une vue schématique en plan d'un exemple de réalisation d'un châssis interne selon l'invention ;
- la figure 3, une vue partielle de la figure 2 illustrant la liaison entre le tablier et les colonnes de support du châssis interne selon l'invention ;
- la figure 4, une vue schématique en plan d'un deuxième mode de réalisation d'un autoclave selon l'invention ; et
- la figure 5, une vue partielle de la figure 4 illustrant un mode de réalisation d'une fixation étanche et découplée de l'enceinte sur le châssis.

L'invention se rapporte, d'une manière générale, à tout équipement sous pression subissant des contraintes de vibrations ou de chocs translatifs. Dans la description ci-après, l'invention est décrite pour un autoclave, mais n'y est nullement restreinte.

L'invention se rapporte en particulier à un autoclave permettant de découpler l'enceinte de chauffage et de pressurisation de tout ensemble mécanique placé à l'extérieur (appelé bâti) et à l'intérieur (appelé châssis). Ce découplage permet d'éviter de répercuter les éventuels vibrations et/ou chocs subis par le bâti et/ou le châssis à l'enceinte et générés par le moyen de secouage en translation. Par ailleurs, l'autoclave selon l'invention permet aux différents éléments de se dilater indépendamment les uns des autres.

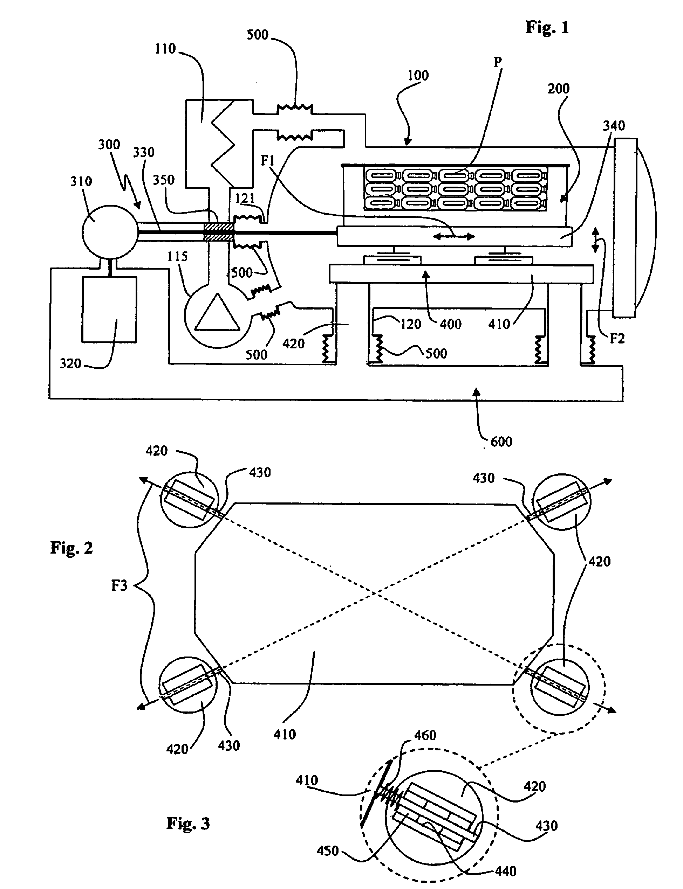

Le mode de réalisation illustré en figure 1 comprend une enceinte 100 munie d'un moyen de chauffage 110 et d'un moyen de pressurisation 115. Un panier 200 de stockage des produits alimentaires ou pharmaceutiques P est disposé dans l'enceinte 100. Le panier 200 est couplé à un moyen de secouage en translation 300 et monté coulissant sur un châssis interne 400 présentant un tablier 410 soutenu par des colonnes 420 destinées à être fixées sur un support immobile tel qu'un bâti à forte inertie 600. Grâce à l'agencement selon l'invention, ce bâti, ainsi que l'enceinte 100 peuvent être conçus et fabriqués avec les mêmes exigences et les mêmes tolérances que les enceintes et bâtis de machines outils traditionnelles.

Les colonnes 420 du châssis 400 traversent l'enceinte 100 de manière étanche et découplée.

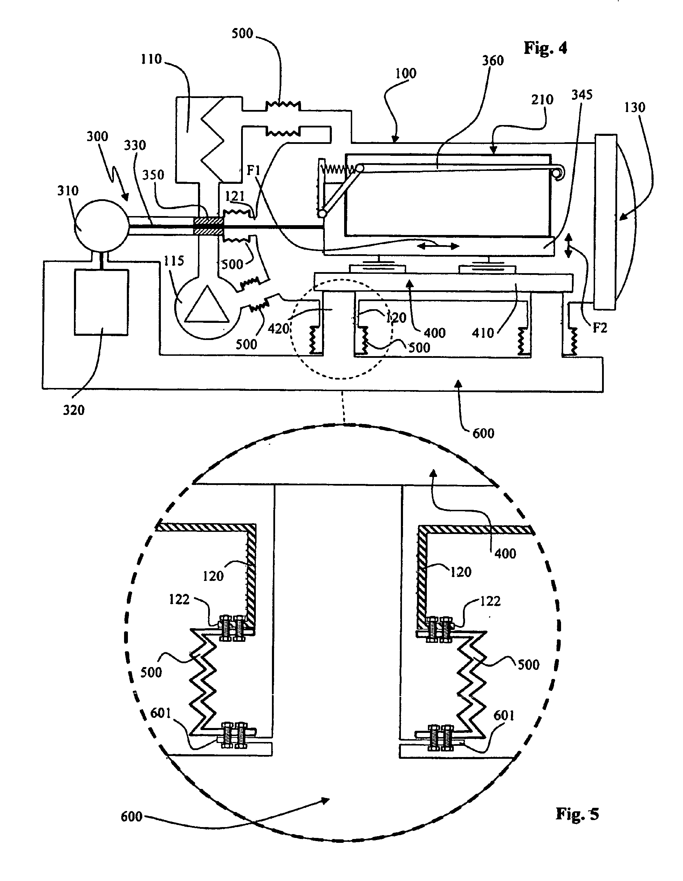

A cette fin, l'enceinte 100 comprend des parties tubulaires 120 entourant les colonnes 420 avec un jeu suffisant pour que, en utilisation, les colonnes 420 n'entrent pas en contact avec les parties tubulaires 120. Celles-ci présentent une extrémité reliée à un soufflet par exemple en matériau élastomère. Tout matériau ou structure permettant, par déformation mécanique, d'absorber des vibrations peut être utilisé. Chaque soufflet 500 présente une structure tubulaire souple 510 dont une extrémité 520 est fixée à une colonne 420 et l'autre extrémité 530 est fixée à la partie tubulaire 120 de l'enceinte 100. Le détail de cette structure est illustré en figure 5.

Dans le mode de réalisation de la figure 5, l'enceinte 100 présente une structure tubulaire 120 se terminant par une collerette 122 pour la fixation d'un soufflet 500, de préférence en matériau élastomère. Le soufflet 500 est lui-même fixé à une collerette 601 soudée à la colonne 420 ou faisant partie intégrante de cette colonne. De manière alternative, le soufflet 500 peut être fixé directement au châssis 600.

De cette manière, l'enceinte 100 est suspendue au-dessus et autour du châssis 400. Celui-ci prend donc appui à l'extérieur de l'enceinte sans risque de transmettre des vibrations ou des chocs à l'enceinte. En outre, la pression et la chaleur à l'intérieure de l'enceinte ne risque pas de s'échapper grâce aux liaisons étanches entre l'enceinte et les soufflets, d'une part, et les soufflets et le châssis ou toute autre pièce (moyen de chauffage, moyen de pressurisation, moyen de secouage ou autre) d'autre part.

Le moyen de secouage 300 comprend un excentrique 310 actionnable par un moteur 320, et un arbre 330 couplé à l'excentrique 310 et au panier 200.

Dans le mode de réalisation de la figure 1, le couplage de l'arbre au panier se fait par l'intermédiaire d'un plateau 340 sur lequel est fixé solidement le panier 200 par un moyen de fixation. Le plateau 340 est monté coulissant sur le tablier 410, par exemple grâce à des roulements à billes ou des patins en matériau antiadhésif.

De manière préférentielle, l'autoclave selon l'invention comprend un palier 350 pour supporter l'arbre couplé à l'excentrique 310 et au panier 200.

D'une manière générale, le moyen de secouage 300 est associé à l'enceinte 100 au moyen d'un soufflet en matériau élastomère semblable au soufflet 500 préalablement décrit.

Dans le mode de réalisation de la figure 1, la liaison étanche et découplée entre l'enceinte 100 et le moyen de secouage 300 est agencée entre une partie tubulaire 121 de l'enceinte 100 entourant l'arbre 330 et le pallier 350.

En utilisation, le moteur 320 actionne l'excentrique 310 de sorte que l'arbre 330 applique un mouvement de va-et-vient en translation, selon la flèche F1, au panier 200.

Si les liaisons mécaniques entre le moteur 320, l'excentrique 310 et l'arbre 300 étaient parfaites, c'est-à-dire sans aucun jeu, le mouvement transmis par l'arbre au plateau 340 serait parfaitement translatif. Cependant, dans la réalité, il existe toujours des jeux dans les différentes liaisons mécaniques. A cause de ces jeux, le mouvement transmis par l'arbre 330 au panier 200 n'est pas parfaitement translatif (uniquement selon la flèche F1) et de nombreuses vibrations selon la flèche F2 sont également générées.

La réduction de ces jeux génèrerait des coûts de fabrication excessivement importants. En outre, ce type d'optimisation tend à brider tous les assemblages pour réduire autant que faire se peut les niveaux de contraintes, mais il ne permet pas d'envisager une durée de vie suffisante pour les utilisateurs.

C'est pourquoi, les systèmes de traitement thermique à secouage translatif de l'état de la technique n'ont jamais pu être mis en oeuvre pour des quantités de produits industrielles. En effet, si un panier d'une tonne était secoué par les systèmes de l'état de la technique, les vibrations entraîneraient à très court terme la destruction de l'enceinte, générant des fuites thermiques très dangereuses.

L'autoclave selon l'invention permet un découplage entre les moyens de secouage et l'enceinte. Ainsi, les vibrations inévitables entrainées par le moyen de secouage du plateau (par les motoréducteurs, les systèmes de transmission du mouvement, etc.) ne sont pas transmises à l'enceinte, et il est possible de secouer des paniers 200 pesant plus d'une tonne avec des pièces (châssis, bâtis et enceinte) conçues et fabriquées avec des exigences et des tolérances classiques dans l'industrie. Par exemple, la fabrication de l'enceinte, peut être réalisée par des procédés de chaudronnerie traditionnels, sans exigences particulières.

L'enceinte est conçue et calculée pour résister à différentes sollicitations :
- La pression,
- La température,
- L'association des deux : pression et température,
- Les conditions cycliques (batch) permettant de définir une tenue à la fatigue.

Le découplage mécanique entre l'enceinte et le reste du système d'autoclave selon l'invention génère néanmoins des problèmes de dilation différentielle entre les parties chaudes et les parties à température ambiante de l'autoclave. En effet, par exemple, les colonnes 420 présentent une partie « chaude » localisée à l'intérieur de l'enceinte qui est à une température de stérilisation, et une partie « froide » fixée sur le bâti extérieur 600 qui, lui, est à température ambiante.

Lors des phases de chauffage et de refroidissement, les différentes parties concernées, l'enceinte et le châssis interne, se dilatent et se rétractent chacun à une allure différente (selon leur coefficient de transfert thermique, le matériau et donc le coefficient de dilatation...). Le bâti externe, lui, reste à température ambiante

Les dilatations différentielles ne peuvent être bloquées. Elles mettent donc les structures chaudronnées (l'enceinte) et mécano soudées (le bâti) en contrainte.

La figure 2 illustre les moyens de l'invention permettant de résoudre le problème de dilatation différentielle générée par la structure de l'autoclave selon l'invention.

Dans le mode de réalisation illustré en figure 2, le tablier 410 est attaché aux colonnes de support 420 au moyen de tiges 430 coopérant de manière coulissante avec un orifice ménagé dans chaque colonne 420.

La figure 3 est un agrandissement de cette liaison entre le tablier 410 et une colonne 420. Dans le mode de réalisation illustré dans cet agrandissement, l'orifice 440, dans lequel est engagée la tige 430, est garni d'un matériau 450 permettant un coulissement à frottement limité de la tige 430 dans l'orifice 440.

Les tiges de fixation 430 sont disposées sur le tablier de manière coaxiale avec une ou des directions de dilatation privilégiées du tablier. En effet, selon la forme du tablier, celui-ci se dilatera selon une ou plusieurs directions de dilatation privilégiée.

Dans le mode de réalisation de la figure 2, le tablier présente une forme sensiblement rectangulaire. Les sommets du rectangle ont été biseautés pour permettre l'insertion des tiges tout en optimisant l'encombrement. Les tiges 430 sont donc disposées aux angles du rectangle, coaxialement par rapport aux diagonales du rectangle, ces diagonales matérialisant les directions de dilatation privilégiées du tablier.

Lors du traitement thermique des produits P dans l'enceinte 100, le tablier subit une dilatation différente des colonnes qui, elles, présentent une partie dans l'enceinte 100 et une autre partie à la température ambiante. Lors de la dilatation, le tablier se rapproche des colonnes 420 et les tiges 430 coulissent à l'intérieur des orifices 440 selon le sens des flèches F3. Lorsque la température baisse à l'intérieur de l'enceinte, le tablier 410 se rétracte dans le sens opposé aux flèches F3.

De manière avantageuse, des moyens de rappel 460 sont agencés entre le tablier et les colonnes de support pour recentrer le tablier par rapport aux colonnes lors du refroidissement.

Le mode de réalisation illustré en figure 4 présente un moyen de fixation avantageux du panier dans l'autoclave.

Dans ce mode de réalisation, le panier 210 est disposé sur un plateau 345 muni d'un bord de calage 347. Par ailleurs, le panier 210 comprend un moyen de préhension 215 d'une griffe d'accrochage 360. Cette griffe d'accrochage 360 est montée pivotante autour d'un arbre 362 couplé au plateau 345, entre une position de fixation dans laquelle la griffe est en prise avec le moyen de préhension 215, et une position de libération du panier par rapport au plateau, dans laquelle le panier 210 est libre par rapport à la griffe. Pour assurer le maintien et le calage du panier 210 sur le plateau (et contre le bord de calage 347), la griffe 360 est couplée à un moyen de rappel 364.

En utilisation, le panier 210 est introduit dans l'enceinte 100 par une ouverture 130. Le panier 210 est alors disposé sur le plateau 345, de préférence contre le bord de calage 347. Ensuite, la griffe d'accrochage 360 est actionnée pour qu'elle soit en prise avec le moyen de préhension 215 du panier 210. La griffe 360 est alors relâchée et le moyen de rappel 364 plaque le panier contre le bord de calage 347. La force et la structure du moyen de rappel 364 doivent être choisies de telle sorte que le secouage en translation du plateau 345 soit sensiblement intégralement transmis au panier 210, et aux produits P qu'il contient, grâce au couplage de la griffe et du panier.

L'autoclave selon l'invention élimine toutes les liaisons rigides et supposées indéformables entre le bâti externe et l'enceinte sous pression, et entre le châssis interne et le bâti externe, sources de déformations lors de la mise en température et donc de contraintes parasites entrainant la destruction de l'équipement.

Il est fréquent dans l'industrie de devoir appliquer un mouvement à une pièce ou à un ensemble de pièces simultanément à l'application sur cette même pièce ou ensemble de pièces d'un traitement thermique.

De façon plus spécifique, la ou les pièces peuvent être des contenants, le mouvement permet d'agiter le contenu sur lequel le traitement thermique est appliqué.

C'est le cas des cuiseurs, pasteurisateurs ou stérilisateurs dans les industries agroalimentaires ou encore pharmaceutiques.

Le mouvement appliqué a pour but, d'accélérer le transfert thermique et/ou de préserver les qualités (organoleptiques) du produit contenu.

Grâce à l'autoclave selon l'invention, il est possible d'effectuer un traitement thermique court (15 minutes) d'une quantité industrielle de produits.

## Revendications

1. Système de secouage d'articles à l'intérieur d'un équipement sous pression, comprenant une enceinte (100), munie d'un moyen de chauffage (110) et d'un moyen de pressurisation (115), et un panier de stockage (200, 210) des articles (P) couplé à un moyen de secouage en translation (300, 310-320-330-340), **caractérisé en ce que** le panier (200, 210) est monté coulissant sur un châssis (400) présentant un tablier (410) soutenu par des colonnes de support (420) traversant l'enceinte (100) de manière étanche et découplée et destinées à être fixées sur un support immobile (600).

2. Système de secouage d'articles selon la revendication 1, dans lequel le moyen (300) de secouage en translation comprend :
- un excentrique (310) actionnable par un moteur (320), et
- un arbre (330) couplé à l'excentrique (310) et au panier (200, 210).

3. Système de secouage d'articles selon la revendication 2, dans lequel l'arbre (330) est supporté par un palier (350) associé à l'enceinte (100) de manière étanche et découplée.

4. Système de secouage d'articles selon la revendication 2, dans lequel l'arbre (330) est couplé au panier (100) par l'intermédiaire d'un plateau 340, 345) monté coulissant sur le châssis (400) et d'un moyen de fixation 360-362-364-215) du panier (200, 210) sur le plateau (340, 345).

5. Système de secouage d'articles selon l'une quelconque des revendications 1 à 4, dans lequel les colonnes de support (420) sont associées à l'enceinte (100) au moyen d'un soufflet (500).

6. Système de secouage d'articles selon la revendication 5, dans lequel le soufflet (500) est en un matériau choisi parmi un matériau élastomère et de l'inox.

7. Système de secouage d'articles selon l'une quelconque des revendications 5 ou 6, dans lequel chaque soufflet (500) présente une structure tubulaire souple (510) dont une extrémité (520) est fixée à une colonne et l'autre extrémité (530) est fixée à l'enceinte (100).

8. Système de secouage d'articles selon l'une quelconque des revendications 1 à 7, dans lequel le moyen de chauffage (110) et le moyen de pressurisation (115) sont associés à l'enceinte (100) de manière étanche et découplée au moyen d'un soufflet (500).

9. Système de secouage d'articles selon l'une quelconque des revendications 1 à 8, dans lequel le tablier (410) est attaché aux colonnes de support (420) au moyen de tiges (430) coopérant de manière coulissante avec un orifice (440) ménagé dans chaque colonne.

10. Système de secouage d'articles selon la revendication précédente, dans lequel les tiges (430) sont disposées sur le tablier (410) de manière coaxiale avec une ou des direction(s) de dilatation privilégiée du tablier.

11. Système de secouage d'articles selon la revendication précédente, dans lequel le tablier présente une forme sensiblement rectangulaire et les tiges sont disposés coaxialement par rapport aux diagonales du rectangle.

12. Système de secouage d'articles selon l'une quelconque des revendications 1 à 11, dans lequel des moyens de rappel (460) sont agencés entre le tablier (410) et les colonnes de support (420) pour recentrer le tablier par rapport aux colonnes de support lors du refroidissement.

13. Système de secouage d'articles selon l'une quelconque des revendications 3 à 12, dans lequel le moyen de fixation (300) comprend une griffe d'accrochage (360) destinée à coopérer avec le panier (210), montée pivotante par rapport au plateau (345), entre une position de fixation et une position de libération du panier par rapport au plateau.

14. Système de secouage d'articles selon la revendication 13, dans lequel la griffe d'accrochage (360) est combinée à un moyen de rappel (364) en position de fixation.

15. Système de secouage d'articles selon l'une quelconque des revendications 1 à 14, dans lequel les colonnes de support (320) du châssis sont fixées sur un bâti (600) extérieur à l'enceinte (100).

## Patentansprüche

1. System zum Schütteln von Artikeln im Inneren einer Einrichtung unter Druck, umfassend eine Einfassung (100), welche mit einem Heizmittel (110) und einem Druckbeaufschlagungsmittel (115) versehen ist, und einen Korb zur Lagerung (200, 210) von Artikeln (P), welcher mit einem Mittel zum Schütteln durch Translation (300, 310-320-330-340) gekoppelt ist, **dadurch gekennzeichnet, dass** der Korb (220, 210) gleitend an einem Gestell (400) angebracht ist, welches einen Schurz (410) aufweist, der durch Stützsäulen (420) gestützt ist, welche die Einfassung (100) auf abgedichtete und entkoppelte Weise durchlaufen und dazu bestimmt sind, an einem unbeweglichen Träger (600) befestigt zu werden.

2. System zum Schütteln von Artikeln nach Anspruch 1, wobei das Mittel (300) zum Schütteln durch Translation umfasst:
- einen Exzenter (310), welcher durch einen Motor (320) antreibbar ist, und
- eine Welle (330), welche mit dem Exzenter (310) und dem Korb (200, 210) gekoppelt ist.

3. System zum Schütteln von Artikeln nach Anspruch 2, wobei die Welle (330) durch ein Lager (350) gelagert ist, welches auf abdichtende und entkoppelte Weise mit der Einfassung (100) verbunden ist.

4. System zum Schütteln von Artikeln nach Anspruch 2, wobei die Welle (330) mit dem Korb (100) gekoppelt ist über eine Platte (340, 345), welche gleitend an dem Gestell (400) angebracht ist, und über ein Mittel zur Befestigung (360-362-364-215) des Korbes (200, 210) an der Platte (340, 345).

5. System zum Schütteln von Artikeln nach einem der Ansprüche 1-4, wobei die Stützsäulen (420) mittels eines Balgs (500) mit der Einfassung (100) verbunden sind.

6. System zum Schütteln von Artikeln nach Anspruch 5, wobei der Balg (500) aus einem Material ist, welches ausgewählt ist aus einem elastomeren und einem nicht oxidierenden Material.

7. System zum Schütteln von Artikeln nach einem der Ansprüche 5 oder 6, wobei jeder Balg (500) eine flexible röhrenartige Struktur (510) aufweist, von welcher ein Ende (520) an einer Säule befestigt ist und das andere Ende (530) an der Einfassung (100) befestigt ist.

8. System zum Schütteln von Artikeln nach einem der Ansprüche 1-7, wobei das Heizmittel (110) und das Druckbeaufschlagungsmittel (115) mittels eines Balgs (500) auf abdichtende und entkoppelte Weise mit der Einfassung (100) verbunden sind.

9. System zum Schütteln von Artikeln nach einem der Ansprüche 1-8, wobei der Schurz (410) an den Stützsäulen (420) mittels Stangen (430) angebracht ist, welche auf gleitende Weise mit einer Öffnung (440) zusammenwirken, die in jeder Säule ausgespart ist.

10. System zum Schütteln von Artikeln nach dem vorhergehenden Anspruch, wobei die Stangen (430) an dem Schurz (410) auf mit einer oder den bevorzugten Ausdehnungsrichtung (en) des Schurzes koaxialen Weise angeordnet sind.

11. System zum Schütteln von Artikeln nach dem vorhergehenden Anspruch, wobei der Schurz eine im Wesentlichen rechteckige Form aufweist und die Stangen koaxial bezüglich der Diagonalen des Rechtecks angeordnet sind.

12. System zum Schütteln von Artikeln nach einem der Ansprüche 1-11, wobei Rückstellmittel (460) zwischen dem Schurz (410) und den Stützsäulen (420) angeordnet sind, um den Schurz beim Abkühlen wieder bezüglich der Stützsäulen zu zentrieren.

13. System zum Schütteln von Artikeln nach einem der Ansprüche 3-12, wobei das Mittel zur Befestigung (300) einen Rasthaken (360) umfasst, der dazu bestimmt ist, mit dem Korb (210) zusammenzuwirken, welcher schwenkbar bezüglich der Platte (345) angebracht ist, zwischen einer Position zur Befestigung und einer Position zum Lösen des Korbes bezüglich der Platte.

14. System zum Schütteln von Artikeln nach Anspruch 13, wobei der Rasthaken (360) in der Befestigungsposition mit einem Rückstellmittel (364) kombiniert ist.

15. System zum Schütteln von Artikeln nach einem der Ansprüche 1-14, wobei die Stützsäulen (320) des Gestells an einem Gestell (600) außerhalb der Einfassung (100) befestigt sind.

## Claims

1. A system for shaking items inside a device under pressure, comprising a chamber (100) equipped with a heating means (110) and with a pressurizing means (115), and a storage basket (200, 210) for the items (P) coupled to a translational shaking means (300, 310-320-330-340), wherein the basket (200, 210) is slidably mounted on a chassis (400) exhibiting a platform (410) supported by support columns (420) passing through the chamber (100) in a fluidtight and decoupled manner and intended to be secured to an immovable support (600).

2. The system for shaking items as claimed in claim 1, in which the translational shaking means (300) comprises:
- an eccentric (310) that can be actuated by a motor (320), and
- a shaft (330) coupled to the eccentric (310) and to the basket (200, 210).

3. The system for shaking items as claimed in claim 2, in which the shaft (330) is supported by a bearing (350) associated with the chamber (100) in a fluidtight and decoupled manner.

4. The system for shaking items as claimed in claim 2, in which the shaft (330) is coupled to the basket (100) by the intermediary of a stage (340, 345) slidably mounted on the chassis (400) and of a securing means (360-362-364-215) for securing the basket (200, 210) to the stage (340, 345).

5. The system for shaking items as claimed in any one of claims 1 to 4, in which the support columns (420) are associated with the chamber (100) by means of a gaiter (500).

6. The system for shaking items as claimed in claim 5, in which the gaiter (500) is made of a material chosen from an elastomeric material and stainless steel.

7. The system for shaking items as claimed in either one of claims 5 and 6, in which each gaiter (500) has a flexible tubular structure (510), one end (520) being secured to a column and the other end (530) being secured to the chamber (100).

8. The system for shaking items as claimed in any one of claims 1 to 7, in which the heating means (110) and the pressurizing means (115) are associated with the chamber (100) in a fluidtight and decoupled manner by means of a gaiter (500).

9. The system for shaking items as claimed in any one of claims 1 to 8, in which the platform (410) is attached to the support columns (420) by means of rods (430) collaborating in a sliding manner with a hole (440) formed in each column.

10. The system for shaking items as claimed in the preceding claim, in which the rods (430) are arranged on the platform (410) such that they are coaxial with one or more favored direction(s) of expansion of the platform.

11. The system for shaking items as claimed in the preceding claim, in which the platform has a substantially rectangular shape and the rods are arranged coaxially with respect to the diagonals of the rectangle.

12. The system for shaking items as claimed in any one of claims 1 to 11, in which the return means (460) are arranged between the platform (410) and the support columns (420) in order to re-center the platform with respect to the support columns during cooling.

13. The system for shaking items as claimed in any one of claims 3 to 12, in which the securing means (300) comprises a catching claw (360) intended to collaborate with the basket (210) and mounted to pivot relative to the stage (345) between a position in which the basket is secured to, and a position in which the basket is released from, the stage.

14. The system for shaking items as claimed in claim 13, in which the catching claw (360) is combined with a return means (364) encouraging return to the secured position.

15. The system for shaking items as claimed in any one of claims 1 to 14, in which the support columns (320) of the chassis are fixed to a frame (600) external to the chamber (100).
